# EUROPÄISCHE PATENTANMELDUNG

(11) **EP 3 065 344 A1**
(43) Veröffentlichungstag der Anmeldung: **07.09.2016**
(21) Anmeldenummer: 16020064.8
(22) Anmeldetag: 03.03.2016
(51) Int. Cl.: H04L 12/28, H04L 29/08, H04L 29/12

(54) **VERFAHREN UND SYSTEM ZUR INTEGRATION VON ENTFERNTEN GERÄTEN IN EINE LOKALE AUTOMATISIERUNGSSTRUKTUR**

(30) Priorität: 03.03.2015 DE 102015002821
(71) Anmelder: Deutsche Telekom AG, 53113 Bonn (DE)
(72) Erfinder: HUND, Martin, 56370 Rettert (DE); UNTERSCHÜTZ, Thomas, 64331 Weiterstadt (DE); SINNING, Thorsten, 52080 Aachen (DE)
(74) Vertreter: Raible Deissler Lehmann Patentanwälte

(57) **Zusammenfassung**

Die vorliegende Erfindung betrifft ein Verfahren zur Integration mindestens eines zumindest zeitweise von einer Räumlichkeit entfernten Geräts in eine lokale Räumlichkeitsautomatisierungsstruktur, bei dem ein Proxy-Server vorgesehen wird und das mindestens eine zumindest zeitweise von der Räumlichkeit entfernte Gerät bei dem Proxy-Server registriert wird, wodurch das mindestens eine zumindest zeitweise von der Räumlichkeit entfernte Gerät und ein in der Räumlichkeitsautomatisierungsstruktur angeordnetes Home-Gateway über den Proxy gegenseitig Nachrichten übermitteln können.

## Beschreibung

Die vorliegende Erfindung betrifft ein Verfahren und ein System zur Integration mindestens eines zumindest zeitweise von einer Räumlichkeit entfernten Geräts in einer lokalen Räumlichkeitsautomatisierungsstruktur. Die vorliegende Erfindung betrifft ferner ein Home-Gateway zur Steuerung von Protokollen der Gebäudeautomatisierung mit dem Internetprotokoll oder zur Umsetzung des Internetprotokolls in den Protokollen von Gebäudeautomatisierungsgeräten.

Unter einem zumindest zeitweise von einer Räumlichkeit entfernten Gerät versteht man dabei nicht nur sogenannte "entfernte Appliances", sondern auch sogenannte "nomadische Appliances".

Systeme zur Gebäudeautomatisierung steuern in der Regel Geräte, wie bspw. Heizungsregler, Lichtschalter oder Temperatursensoren. All diese Geräte befinden sich lokal in einem Haus eines Benutzers und werden über bekannte, lokal wirkende Mechanismen des Systems zur Gebäudeautomatisierung, wie bspw. Funktechnologien, angeschlossen. In der Regel haben insbesondere Funktechnologien, aber auch alternative Kommunikationswege lediglich eine auf das Haus bzw. Gebäude begrenzte, lokale Reichweite.

Nomadische Geräte bzw. nomadische Appliances, die im System zur Gebäudeautomatisierung zwar bekannt sind, aber z. B. mit einem Benutzer das Gebäude verlassen und wieder betreten, sind in der Zeit Ihrer Abwesenheit für das Gebäudeautomatisierungssystem folglich nicht über die herkömmlichen Kommunikationswege erreichbar. Folglich sind sie für das Gebäudeautomatisierungssystem nicht verfügbar und somit ihre Sensorik nicht nutzbar und ihre Aktorik nicht steuerbar.

Dasselbe gilt für entfernte Geräte bzw. entfernte Appliances, wie bspw. ein schaltbares Licht an einer dem Gebäude naheliegenden Garage. Sie werden dauerhaft außerhalb des Gebäudes betrieben und können mit den Mitteln des Stands der Technik nicht an das System zur Gebäudeautomatisierung angeschlossen werden.

Aus der Druckschrift US 8,473,325 ist ein System zur automatisierten Installation und zum Management von IT-Geräten in einem Heimnetzwerk bekannt. Allerdings erlaubt das dort beschriebene System nur indizierte Geräte in einem festbegrenzten Netzabschnitt zu regulieren.

Es war demnach eine Aufgabe der vorliegenden Erfindung, eine Möglichkeit vorzusehen, auch nomadische oder entfernte Geräte in eine lokale Automatisierungsstruktur einer Räumlichkeit zu integrieren.

Diese Aufgabe wird gelöst von einem Verfahren mit den Merkmalen des Patentanspruchs 1 sowie einem System mit den Merkmalen des Patentanspruchs 17.

Weitere Ausgestaltungen sind den jeweiligen Unteransprüchen und der nachfolgenden Beschreibung zu entnehmen.

Gemäß Patentanspruch 1 wird ein Verfahren zur Integration mindestens eines zumindest zeitweise von einer Räumlichkeit entfernten Geräts in einer lokalen Räumlichkeitsautomatisierungsstruktur vorgeschlagen. Bei dem erfindungsgemäßen Verfahren wird ein Proxy-Server, kurz Proxy, vorgesehen, der sich über eine erste Pairing-Verbindung zu einem von der Automatisierungsstruktur ansprechbaren Home-Gateway und durch Hinterlegen einer Proxy-ID und einer Proxy-spezifischen globalen Adresse, insbesondere einer Proxy-spezifischen IP-Adresse bei einem Zentralen Dienst registriert. Ferner wird das mindestens eine zumindest zeitweise von der Räumlichkeit entfernte Gerät (bspw. bei temporärer Anwesenheit in der Räumlichkeit) über eine zweite Pairing-Verbindung zu dem Home-Gateway in der Automatisierungsstruktur registriert, wobei das Home-Gateway eine lokale Proxy-spezifische Adresse an das mindestens eine zumindest zeitweise von der Räumlichkeit entfernte Gerät übermittelt, das dann, ggf. mit Übermittlung einer Appliance-ID, bei dem Proxy-Server registriert wird, der eine Appliance-ID zusammen mit der Proxy-ID bei dem Zentralen Dienst hinterlegt. Der Proxy hinterlegt in Reaktion darauf bei dem mindestens einen zumindest zeitweise von der Räumlichkeit entfernten Gerät eine Adresse des Zentralen Dienstes sowie die Proxy-ID, worüber das mindestens eine zumindest zeitweise von der Räumlichkeit entfernte Gerät bei Eintritt in einen Bereich, in dem es über Internet und/oder ein WAN (Wide Area Network) kommunizieren kann, sich bei dem Zentralen Dienst anmeldet, der dann eine globale Adresse der Räumlichkeit bei dem Gerät hinterlegt und das Gerät beim Proxy ggf. mit Übermittlung der Appliance-ID und einer aktuellen globalen Geräte-Adresse und der Proxy das Gerät beim Home-Gateway, in der Regel mit Übermittlung der Appliance-ID, anmeldet, so dass das Gerät und das Home-Gateway sich über den Proxy gegenseitig Nachrichten übermitteln können.

Die vorliegende Erfindung betrifft ein Verfahren zur Integration mindestens eines zumindest zeitweise von einer Räumlichkeit entfernten Geräts in eine lokale Räumlichkeitsautomatisierungsstruktur, bei dem ein Proxy-Server vorgesehen wird und das mindestens eine zumindest zeitweise von der Räumlichkeit entfernte Gerät bei dem Proxy-Server registriert wird, wodurch das mindestens eine zumindest zeitweise von der Räumlichkeit entfernte Gerät und ein in der Räumlichkeitsautomatisierungsstruktur angeordnetes Home-Gateway über den Proxy gegenseitig Nachrichten übermitteln können.

Es ist denkbar, dass die Appliance bspw. von dem Home-Gateway beim Proxy registriert wird oder dass sich die Appliance selbst aktiv beim Proxy registriert.

In der Regel ist dem Zentralen Dienst genau eine Adresse zugeordnet. Es ist jedoch auch denkbar, dass der Zentrale Dienst zugunsten von Ausfallsicherheit und/oder Verfügbarkeit über mehrere Adressen verfügt.

Die lokale Adresse des Proxy kann bspw. konfiguriert werden.

Das erfindungsgemäße Verfahren zur Integration mindestens eines zumindest zeitweise von einer Räumlichkeit entfernten Geräts ermöglicht es, sowohl nomadische Geräte als auch sich dauerhaft außerhalb einer Reichweite einer gewählten Kommunikationstechnologie der Struktur zur Automatisierung der Räumlichkeit befindliche Geräte in die Struktur zur Automatisierung der Räumlichkeit zu integrieren.

Somit ermöglicht das erfindungsgemäße Verfahren auch eine Steuerung von nomadischen Appliances, die sich außerhalb der Räumlichkeit bzw. der Automatisierungsstruktur befinden. Unter einer Räumlichkeit sind dabei sowohl mobile als auch immobile Räumlichkeiten zu verstehen. Bei einer immobilen Räumlichkeit handelt es sich bspw. um ein Gebäude, einen Gebäudekomplex, wie bspw. ein Krankenhaus oder eine Schule. Bei einer mobilen Räumlichkeit kann es sich bspw. um ein Auto, einen Bus, ein Flugzeug oder eine Bahn handeln.

Nomadische Appliances bzw. nomadische Geräte haben die Eigenschaft, dass sie die lokale Struktur zur Automatisierung der entsprechenden Räumlichkeit bspw. gemeinsam mit einem Nutzer verlassen können. Mittels des erfindungsgemäßen Verfahrens bleiben sie aber trotz der dann entstandenen räumlichen Instanz weiter ein Teil der Automatisierungsstruktur der jeweiligen Räumlichkeit. Mithin kann eine nomadische Appliance weiterhin bspw. Daten an die Struktur zur Automatisierung der Räumlichkeit senden und z. B. Kommandos von der Struktur zur Automatisierung der Räumlichkeit erhalten. Beispiele für nomadische Appliances sind sogenannte Wearables, Uhren, Schrittmesser, Sprechgarnituren oder auch intelligente Kleidung. Wearables, aber auch Sensoren und Aktoren in Autos oder an weiteren Orten aufbewahrte Geräte können somit ihre Daten von einer Automatisierungsstruktur einer entsprechenden Räumlichkeit auslesen lassen. Basierend auf den ausgelesenen Daten können andere Geräte in der entsprechenden Räumlichkeit oder auch dritte nomadische Appliances ein- oder ausgeschaltet werden.

Dasselbe gilt sinngemäß für entfernte Appliances bzw. entfernte Geräte, also für nicht nomadische Sensoren oder Aktoren, die sich dauerhaft an einem festen Ort, aber entfernt von der automatisierten Räumlichkeit bzw. insbesondere des automatisierten Gebäudes befinden. Beispiele für entfernte Appliances sind Beleuchtungen oder Toröffner für eine von einer automatisierten Räumlichkeit entfernten Garage. Auch diese bleiben trotz der räumlichen Distanz weiter ein Teil der entsprechenden Räumlichkeitsautomatisierungsstruktur. Es sei betont, dass der Begriff Räumlichkeitsautomatisierung und damit eine Datenaufnahme bzw. Datenübertragung innerhalb einer Räumlichkeit, wie bspw. eines Gebäudes oder eines Gebäudekomplexes, nicht nur eine Steuerung von Funktionen innerhalb eines Gebäudes umfasst, sondern sich ganz allgemein auf eine Steuerung beliebiger Funktionalitäten und auch auf ein Auslesen jeglicher Sensoren innerhalb eines Gebäudes oder eines Gebäudekomplexes erstreckt. Das umfasst bspw. auch den Betrieb von Alarmanlagen und ein Auslesen biologischer Parameter von in einem Gebäude befindlichen Personen mittels Sensoren, insbesondere im Rahmen von Healthcare bzw. Gesundheitsfürsorge. Insbesondere umfasst eine Gebäude- bzw. Räumlichkeitsautomatisierungsstruktur auch Überwachungs-, Steuer-, Regel- und Optimierungseinrichtungen, bei denen alle Sensoren, Aktoren, Bedienelemente, Verbraucher und andere technischen Einheiten miteinander vernetzt sind.

Im Folgenden werden nun zunächst das erfindungsgemäße Verfahren sowie das erfindungsgemäße System beschrieben.

Das erfindungsgemäße System zu Integration mindestens eines zumindest zeitweise von einer Räumlichkeit entfernten Geräts in eine lokale Automatisierungsstruktur einer Räumlichkeit besteht zunächst aus einem System zur Automatisierung, wie es aus dem Stand der Technik bekannt ist. Dieses bekannte System wird nunmehr erfindungsgemäß um einen sogenannten Proxy-Server oder kurz Proxy ergänzt, der die Verwaltung von zu integrierenden entfernten und/oder nomadischen Geräten bzw. Appliances übernimmt sowie eine Kommunikation von und zu diesen zu integrierenden Appliances weiterleitet bzw. ermöglicht.

In weiterer Ausgestaltung des erfindungsgemäßen Verfahrens meldet sich das mindestens eine zumindest zeitweise von der Räumlichkeit entfernte Gerät bei Verlassen der Räumlichkeit mittelbar über den Proxy und mit Übermittlung der Appliance-ID beim Home-Gateway ab.

In weiterer Ausgestaltung des erfindungsgemäßen Verfahrens meldet sich das mindestens eine zumindest zeitweise von der Räumlichkeit entfernte Gerät bei wiederkehrendem Eintritt in die Räumlichkeit mit Übermittlung der Appliance-ID beim Proxy und der Proxy das Gerät beim Home-Gateway an. Dabei wird ggf. eine Pairing-Verbindung zwischen dem mindestens einen zumindest zeitweise von der Räumlichkeit entfernten Gerät und dem Home-Gateway aufgebaut.

Bei wiederkehrendem Eintritt des mindestens einen zumindest zeitweise von der Räumlichkeit entfernten Geräts in einen Bereich, in dem es über das Internet oder ein WAN kommunizieren kann, meldet sich das Gerät mit Übermittlung der Proxy-ID, der Appliance-ID sowie seiner aktuellen, globalen Adresse bei dem Zentralen Dienst und der Zentrale Dienst das Gerät mit Übermittlung der Appliance-ID und der aktuellen, globalen Adresse des Geräts beim Proxy und der Proxy das Gerät mit Übermittlung der Appliance-ID beim Home-Gateway an.

In weiterer Ausgestaltung wird zur Übermittlung einer Nachricht von dem Home-Gateway zu dem mindestens einen zumindest zeitweise von der Räumlichkeit entfernten Gerät von dem Home-Gateway dessen Erreichbarkeit über ein lokales Netz der Räumlichkeit geprüft und bei Nichterreichbarkeit des Geräts über das lokale Netz der Räumlichkeit die Nachricht zusammen mit der Appliance-ID an den Proxy gesendet, der die Nachricht an das eine zumindest zeitweise von der Räumlichkeit entfernte Gerät weiterleitet. Dabei nutzt der Proxy eine aktuelle globale Adresse des Geräts. Die aktuelle globale Adresse wird zuvor seitens des Geräts bereitgestellt.

In weiterer Ausgestaltung des erfindungsgemäßen Verfahrens wird bei Nichterreichbarkeit des Geräts über das Internet oder ein jeweiliges WAN dies von dem Proxy erkannt und die Nachricht wird sodann verworfen.

In weiterer Ausgestaltung des erfindungsgemäßen Verfahrens wird zur Übermittlung einer Nachricht von dem mindestens einen zumindest zeitweise von der Räumlichkeit entfernten Gerät zu dem Home-Gateway die Nachricht zusammen mit der Proxy-ID und der Appliance-ID unter Nutzung der globalen Adresse der Räumlichkeit an den Proxy gesendet, der die Nachricht dann gemeinsam mit der Appliance-ID an das Home-Gateway weiterleitet.

Bei Verlassen eines Bereichs, in dem das Gerät über das Internet bzw. über ein entsprechendes WAN kommunizieren kann, meldet sich das Gerät bei dem Zentralen Dienst mit Übermittlung der Proxy-ID und der Appliance-ID ab. In Reaktion darauf meldet der Zentrale Dienst das Gerät mit Übermittlung der Appliance-ID am Proxy und der Proxy das Gerät mit Übermittlung der Appliance-ID beim Home-Gateway ab.

Zum De-Registrieren des zumindest einen zumindest zeitweise von der Räumlichkeit entfernten Geräts von der Automatisierungsstruktur der Räumlichkeit de-registriert sich das Gerät mit Übermittlung der Appliance-ID bei dem Proxy und der Proxy de-registriert das Gerät bei dem Home-Gateway. Anschließend findet ein (von der Appliance-Technologie abhängiges) Un-Pairing zwischen Gerät und Automatisierungs-Gateway statt. Der Schritt des Un-Pairing entspricht dabei dem Stand der Technik.

In möglicher Ausgestaltung des erfindungsgemäßen Verfahrens wird die gegenseitige Nachrichtenübermittlung zwischen dem Home-Gateway und dem Gerät kabellos, auf einer Funktechnologie basierend realisiert. Ebenso ist es denkbar, die anderen Kommunikationspfade, d. h. zwischen Gateway und Proxy und zwischen Proxy und Appliance ebenfalls auf einer Funktechnologie, in der Regel für alle Pfade die gleiche, basierend zu realisieren.

In alternativer Ausgestaltung des erfindungsgemäßen Verfahrens wird die gegenseitige Nachrichtenübermittlung zwischen dem Home-Gateway und dem Gerät kabelbasiert realisiert.

Auch die anderen Kommunikationspfade, d. h. zwischen Gateway und Proxy und zwischen Proxy und Appliance können kabelbasiert realisiert werden. Es ist auch denkbar, dass ein Teil der genannten Kommunikationspfade kabelbasiert und der verbleibende Teil funkbasiert realisiert wird.

Der Zentrale Dienst kann sich bspw. als Cloud-Service außerhalb der Räumlichkeit bzw. außerhalb der Automatisierungsstruktur der Räumlichkeit befinden. Er stellt von ihm bereitzustellende Verfahrensschritte über das Internet und/oder ein jeweiliges WAN bereit.

Der Zentrale Dienst kann cloud-basiert z.B. von einem Anbieter des Hausautomatisierungssystems betrieben und dessen Kunden zur Verfügung gestellt werden. Die Verfahrensschritte, die er im Rahmen des Verfahrens zur Integration von entfernten Geräten in die lokale Gebäudeautomatisierung durchführt, stellt er dann über das Internet bereit. Der Dienst ist ein Zentraler Dienst, weil er genau einmal, zentral, existiert. Im Gegensatz dazu gibt es viele Home Gateways und viele Proxys, jeweils ein Paar in jedem Gebäude. Der Zentrale Dienst besteht aus denselben Sub-Komponenten wie der Proxy.

Es ist denkbar, dass eine Verbindung zwischen dem Home-Gateway und dem mindestens einen zumindest teilweise von der Räumlichkeit entfernten Gerät auf IP-Technologie und IP-Adressen oder auf einem anderen geeigneten Kommunikationsformat und einem dazugehörigen Adressierungsformat basiert. Im Falle, dass die Kommunikation bzw. Verbindung auf IP-Technologie basiert, kann sich dies sowohl auf IPv4 als auch auf IPv6 beziehen.

Bei der IPv4 Adressierung wird einem Router im Gebäude bzw. in der Räumlichkeit eine öffentliche IPv4 Adresse zugewiesen, wobei der Router selbstständig statische oder dynamische lokale IPv4 Adressen vergibt. Dabei sind die öffentliche Adresse oder öffentliche Adresse des Routers und die lokalen IPv4 Adressen der daran angeschlossenen Geräte verschieden und nicht eindeutig. Bei der IPv6 Adressierung erhält jedes Gerät eine eigene öffentliche, d. h. globale IPv6 Adresse. Jedes Gerät im Gebäude ist damit durch seine öffentliche, d. h. globale IP Adresse direkt von außen ansprechbar. Dadurch, dass öffentliche IPv6 Adressen verwendet werden, fällt allerdings die eindeutige lokale Zuordnung von lokalen Geräten weg. Umso wichtiger ist es, dass im Zentralen Dienst oder einem Proxy festgehalten wird, welche Geräte dem Gebäude bzw. der Räumlichkeit oder dem lokalen Räumlichkeitsautomationssystem angehören.

In einer Ausführungsform des erfindungsgemäßen Verfahrens wird die Appliance-ID von dem Gerät vorgegeben und beim Registrieren des Geräts bei dem Proxy an den Proxy übermittelt. Alternativ ist es jedoch auch denkbar, dass die Appliance-ID bei Registrierung des Geräts bei dem Proxy von dem Proxy selbst vorgegeben wird.

Der Proxy bzw. Proxy-Server kann als separates Gerät in der Automatisierungsstruktur einer jeweiligen Räumlichkeit angeordnet werden. Alternativ dazu ist es auch denkbar, dass der Proxy als Zusatzmodul auf einem in der Automatisierungsstruktur bereits vorhandenen Gerät, wie bspw. dem Home-Gateway oder einem anderen Gerät, wie z. B. einem Router Home betrieben wird.

Es ist ferner denkbar, dass sich das Home-Gateway außerhalb der Räumlichkeit befindet oder gänzlich entfällt und dass die Räumlichkeit über das Internet, insbesondere mittels einer in der Räumlichkeit angeordneten Home Automation Bridge angesprochen wird.

Wie voranstehend bereits erwähnt, kann die Räumlichkeit als immobile oder auch als mobile Räumlichkeit gewählt werden.

Für das erfindungsgemäße Verfahren ist es unerheblich, ob der Zentrale Dienst bspw. aus Gründen einer Ausfallsicherheit oder einer Lastverteilung mehrfach instanziiert wird oder nicht.

Es ist ebenfalls für das Verfahren unerheblich, ob eine Kommunikation von mehreren Parametern in einer einzigen Übermittlung getätigt wird oder in einer Sequenz von Übermittlungen. Ferner spielt auch die Reihenfolge, in der die einzelnen Übermittlungen bzw. Requests versendet werden, die sich aus der Auftrennung eines "Sammelrequests" ergeben, keine Rolle.

Es ist ferner für das erfindungsgemäße Verfahren unerheblich, ob das mindestens eine zumindest teilweise von der Räumlichkeit entfernte Gerät, d. h. die nomadische oder die entfernte Appliance direkt IP-fähig ist oder über eine sogenannte Bridge oder ein weiteres Gateway an das Internet oder an das IP-basierte lokale Netzwerk angeschlossen wird. In dem Fall, dass das Gerät bzw. die nomadische oder entfernte Appliance über eine Bridge oder ein IP-Gateway an das Internet oder an das IP-basierte Intranet angeschlossen wird, wird die Gesamtstruktur um dieses entsprechende Element erweitert. Im Falle, dass das Home-Gateway sich außerhalb der Räumlichkeit befindet, aber bspw. über das Internet erreichbar ist, man spricht dann von "in-the-cloud", muss das System um ein Systemelement, wie bspw. eine Home Automation Bridge erweitert werden. Diese befindet sich dann lokal und kann sowohl mit dem Home-Gateway in-the-cloud als auch mit lokalen Appliances kommunizieren. Sie besitzt allerdings in der Regel keine nennenswerte Logik zur Automatisierungsstruktur, sondern dient im Grunde nur einer Protokollumsetzung.

Im Rahmen des erfindungsgemäßen Verfahrens kann sich das Gerät entweder proaktiv bei dem Proxy registrieren oder neue Appliances können vom Proxy "gesucht" und "gefunden" werden. Letzteres kann mit sogenannten Crawling-Mechanismen bewerkstelligt werden. Crawling-Mechanismen sind aus dem Stand der Technik bekannt.

Es ist im Rahmen des erfindungsgemäßen Verfahrens ferner denkbar, dass sich bspw. Teile des erfindungsgemäßen Systems in einer Räumlichkeit, wie bspw. einem Haus befinden, oder einer anderen Räumlichkeit, wie bspw. einer Fabrikhalle, einem Hotel oder auch einer beweglichen Räumlichkeit, wie einem Auto, Bus oder Flugzeug.

In weiterer Ausgestaltung des erfindungsgemäßen Verfahrens wird von dem Proxy bei einem Registrieren des Geräts bei der Automatisierungsstruktur der entsprechenden Räumlichkeit vorab ein sogenanntes Credential generiert und zusammen mit der Proxy-ID und der Appliance-ID beim Zentralen Dienst hinterlegt. Das Credential ist in der Regel eine sehr lange Zahl, die de facto nicht zu erraten ist. Bei einem Credential handelt es sich im weiten Sinne um einen Berechtigungsnachweis. Dabei ist es für das erfindungsgemäße Verfahren unerheblich, ob ein und dasselbe Credential für alle sich zumindest zeitweise von der Räumlichkeit entfernten Geräte, d. h. für alle nomadischen Appliances oder entfernten Appliances gilt, oder ob ein Credential genau eine einzige Appliance bzw. ein einziges Gerät authentifiziert. Darüber hinaus kann ein Credential bspw. von einem Nutzer während seiner "Lebenszeit" invalidiert werden. Alternativ dazu ist es auch möglich, dass eine derartige Ungültigmachung des Credentials nicht möglich ist. Das Credential kann auch von dem Zentralen Dienst oder ggf. von einem anderen Systemelement generiert werden. Das bereits voranstehend erwähnte Beispiel, bei dem das Credential von dem Proxy generiert wird, ist naheliegend, stellt aber lediglich eine spezielle Ausführungsform des erfindungsgemäßen Verfahrens dar. Das Credential kann mit einer Gültigkeitsdauer versehen sein. Neben der Möglichkeit, das Credential als sehr lange Zahl, die de facto nicht zu erraten ist, darzustellen, ist es auch denkbar, das Credential mit einer anderen geeigneten Syntax zu realisieren. Der Stand der Technik stellt dazu eine Vielzahl von Möglichkeiten bereit. Als Beispiel sei auf die Technologie der Token verwiesen.

Insofern es sich um ein auf IP basiertes lokales Netzwerk und um das auf IP basierte Internet handelt, wird die globale Adresse der Räumlichkeit nach dem Stand der Technik auf einem Kommunikationspfad zwischen Proxy und Zentralem Dienst, beigesteuert. Nach dem Stand der Technik wird der Proxy die globale IP-Adresse des Gebäudes nicht ohne weiteres selbst kennen. In diesem Fall wird die globale Adresse von einem IAD (Internet Access Device) auf dem Kommunikationspfad zwischen jeweiligem Gerät und lokalem Netzwerk automatisch beigesteuert. Es ist auch denkbar, dass die globale Adresse der Räumlichkeit von dem Proxy bereitgestellt und an den Zentralen Dienst übermittelt wird.

Eine Nachricht, die nicht ausgeliefert werden kann, wird in der Regel verworfen. Alternativ ist es jedoch denkbar, dass die Nachricht zwischengespeichert wird und bei nächster Gelegenheit versendet wird, d. h. sobald das Gerät wieder erreichbar ist.

Es ist ferner denkbar, dass der Sender einer jeweiligen Nachricht, z. B. das Home-Gateway, darüber informiert wird, ob eine Nachricht von dem Zwischenempfänger, bspw. dem Proxy, an einen weiteren Empfänger, bspw. den Zentralen Dienst, weitergeleitet werden konnte oder ob die Übermittlung der Nachricht fehlgeschlagen ist.

Das voranstehend erwähnte Un-Pairing kann einerseits über das Internet erfolgen oder über lokale Netze zur Haussteuerung der jeweiligen Räumlichkeit. Findet das De-Registrieren über das Internet statt, entspricht dies keinem Un-Pairing nach dem Stand der Technik zwischen dem Gerät und dem Home-Gateway, sondern vielmehr handelt es sich dann um ein "alleinstehendes" Un-Pairing ohne Kommunikation zwischen Gerät und Home-Gateway.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen ausführlich beschrieben.
Figur 1 zeigt in schematischer Darstellung eine Ausführungsform eines erfindungsgemäßen Systems.
Figur 2 zeigt in schematischer Darstellung eine innere Struktur eines erfindungsgemäß vorgesehenen Proxys.
Figur 3 zeigt in schematischer Darstellung einen ersten Verfahrensschritt einer Ausführungsform des erfindungsgemäßen Verfahrens.
Figur 4 zeigt in schematischer Darstellung einen zweiten Verfahrensschritt einer Ausführungsform des erfindungsgemäßen Verfahrens.
Figur 5 zeigt einen dritten Verfahrensschritt einer Ausführungsform des erfindungsgemäßen Verfahrens.
Figur 6 zeigt einen vierten Verfahrensschritt einer Ausführungsform des erfindungsgemäßen Verfahrens.
Figur 7 zeigt einen fünften Verfahrensschritt einer Ausführungsform des erfindungsgemäßen Verfahrens.
Figur 8 zeigt einen sechsten Verfahrensschritt einer Ausführungsform des erfindungsgemäßen Verfahrens.
Figur 9 zeigt einen siebten Verfahrensschritt einer Ausführungsform des erfindungsgemäßen Verfahrens.
Figur 10 zeigt einen achten Verfahrensschritt einer Ausführungsform des erfindungsgemäßen Verfahrens.
Figur 11 zeigt einen neunten Verfahrensschritt einer Ausführungsform des erfindungsgemäßen Verfahrens.
Figur 12 zeigt einen zehnten Verfahrensschritt einer Ausführungsform des erfindungsgemäßen Verfahrens.

Die Figuren werden übergreifend beschrieben. Gleiche Bezugszeichen bezeichnen gleiche Komponenten.

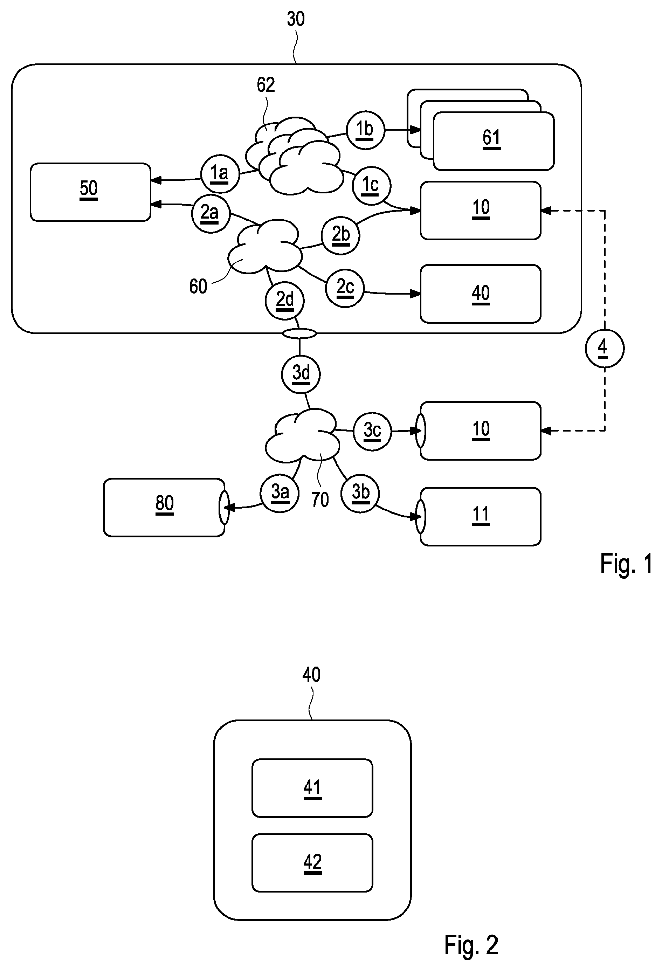

Figur 1 gibt schematisch einen Überblick über eine Ausführungsform eines erfindungsgemäßen Systems zur Integration mindestens eines zumindest zeitweise von einem Gebäude entfernten Geräts 10 in einer lokalen (Gebäude)-Automatisierungsstruktur. Die hier gezeigte Ausführungsform des erfindungsgemäßen Systems umfasst zum einen eine im Wesentlichen aus dem Stand der Technik bekannte Gebäudeautomatisierungsstruktur, die sich innerhalb eines Gebäudes 30 befindet, und ferner einen Proxy-Server, kurz Proxy 40. Bei dem Gebäude 30 kann es sich bspw. um ein Haus oder Wohnung eines Kunden handeln, aber auch jedes andere Gebäude oder jeder andere Gebäudekomplex ist denkbar. Dargestellt ist ein Home-Gateway 50 sowie ein lokales Netzwerk 60. Es gibt lokale Appliances 61, die von dem Home-Gateway 50 über lokale Netze zur Hausgerätesteuerung 62 über Kommunikationspfade 1a und 1b anzusteuern sind. Der Proxy 40 kommuniziert mit dem Home-Gateway 50 über das lokale Netzwerk 60, und zwar über hier dargestellte Kommunikationspfade 2a und 2c.

Bei dem hier dargestellten mindestens einen zumindest zeitweise von einem Gebäude entfernten Gerät 10 handelt es sich um eine nomadische Appliance, die die Eigenschaft hat, dass sie bspw. mit einem Nutzer das Gebäude 30 verlassen und auch wieder betreten kann, was hier durch gestrichelten Pfeil 4 angedeutet ist. Befindet sich das Gerät 10 innerhalb des Gebäudes 30, so kann es entweder über die lokalen Netze zur Hausgerätesteuerung 62 über die Pfade 1a und 1c mit dem Home-Gateway 50 kommunizieren. Hierüber werden die Aktoren der Appliance gesteuert und die Sensoren der Appliance ausgelesen. Hierüber finden auch das Pairing und das Un-Pairing statt. Das entspricht dem Stand der Technik. Oder es kann über das lokale Netzwerk 60 mit dem Home-Gateway über die Kommunikationspfade 2a und 2b und dem Internet 70 über die Pfade 2b, 2d und 3d kommunizieren. Dieser Kommunikationskanal, d. h. über das lokale Netzwerk 60, wird von dem hier beschriebenen Verfahren bei den entsprechenden, unten genannten Verfahrensschritten genutzt. Befindet sich jedoch das Gerät 10 außerhalb des Gebäudes 30, so ist es nicht für das lokale Netzwerk 60 ansprech- oder ansteuerbar. Eine Integration des Geräts 10 ist dann nur über den Proxy 40 möglich, der die nomadische Appliance 10 verwaltet und die Kommunikation von und zu dieser Appliance 10 weiterleitet bzw. ermöglicht. Gleiches gilt für generell entfernte Geräte 11 bzw. entfernte Appliances. In der hier dargestellten Struktur ist sowohl die nomadische Appliance 10, solange sie sich außerhalb des Gebäudes 30 befindet als auch die entfernte Appliance 11 nur über das Internet 70 und entsprechende Kommunikationspfade 3c und 3d bzw. 3b und 3d mit der Gebäudeautomatisierungsstruktur koppelbar. Ferner vorgesehen ist ein Zentraler Dienst 80, der mit dem Gebäude 30 bzw. mit den darin angeordneten Komponenten 50, 61, 10 und 40 über das Internet 70 und entsprechende Kommunikationspfade 3a und 3d kommunizieren kann. Zur Kommunikation mit dem Gebäude benötigen sowohl das Gebäude selbst als auch der Zentrale Dienst, die nomadische Appliance und die entfernte Appliance jeweilig eine globale Adresse, im Fall, dass die Kommunikation auf IP-Technologie basiert, eine jeweilige IP-Adresse. Mittels derartiger IP-Adressen ist sodann eine Kommunikation über jeweilige Schnittstellen möglich, so dass bspw. die nomadische Appliance 10 über Pfade 3c, 3d und 2d an das lokale Netzwerk 60 angekoppelt werden kann und sodann eine Kommunikation über den Proxy 40 mit dem Home-Gateway 50 ermöglicht werden kann.

Bei dem Gerät 10 oder auch dem Gerät 11 bzw. der entfernten Appliance 11 kann es sich um Aktoren und/oder Sensoren eines Systems zur Gebäudesteuerung handeln. Beispiele für derartige Geräte bzw. Appliances sind Heizungsthermostate, Temperaturfühler, Rolladensteuerung, Bewegungsmelder, Alarmanlagen, aber auch insbesondere im Fall einer nomadischen Appliance "Wearables", wie bspw. ein Puls- oder ein Blutdruckmesser.

Die hier dargestellten lokalen Appliances 61 sind Appliances bzw. Geräte, die sich im Gebäude 30 dauerhaft befinden. Eine derartige lokale Appliance entspricht einer Appliance gemäß dem Stand der Technik.

Die hier dargestellte entfernte Appliance 11 ist insofern "entfernt", als sie sich permanent außerhalb des Gebäudes 30 befindet und dabei wegen ihrer Distanz zum Gebäude 30 nicht mehr über die lokalen Netze zur Hausgerätesteuerung 62 ansprechbar ist.

Wie bereits voranstehend erwähnt, handelt es sich bei einer nomadischen Appliance 10 um eine Appliance, die sich wiederkehrend zeitweise innerhalb und zeitweise außerhalb des Gebäudes 30 befindet. Sofern sie sich außerhalb des Gebäudes 30 befindet, ist sie wegen ihrer Distanz zum Gebäude 30 ebenfalls nicht mehr über lokale Funkprotokolle steuerbar. Die Eigenschaft des wechselnden Aufenthaltsorts der nomadischen Appliance 10 ist in Figur 1 durch den gestrichelten Pfeil 4 dargestellt. Eine nomadische Appliance, die sich gerade lokal im Gebäude 30 befindet, ist in der Terminologie der vorliegenden Beschreibung trotzdem keine lokale Appliance 61.

Das Home-Gateway 50 steuert die Geräte bzw. Appliances im Gebäude 30. Insbesondere koordiniert das Home-Gateway 50 die Appliances. So werden bspw. alle Heizkörperventile im Gebäude 30 derart koordiniert, dass im Gebäude 30 eine gewünschte Raumtemperatur gehalten wird. Oder es werden bspw. im Falle des Anschlags eines Bewegungsmelders während der Abwesenheit eines Nutzers des Gebäudes 30 alle Lichter des Gebäudes 30 bzw. des Hauses angeschaltet und ein Alarm an einer entsprechenden Alarmanlage aktiviert. Über die lokalen Netze zur Hausgerätesteuerung 62 steuert das Home-Gateway 50 die im Gebäude 30 sich lokal befindenden Geräte bzw. Appliances 61 und 10, falls letzteres aktuell in dem Gebäude zu finden ist. Die lokalen Netze 62 zur Haussteuerung sind in der Regel Funknetze. Das Home-Gateway 50 kommuniziert in der Regel gleichzeitig mit Appliances 61 verschiedener Hersteller. Damit verbunden kommuniziert das Home-Gateway 50 gleichzeitig über verschiedene, ggf. sogar Appliance-spezifische lokalen Netze zur Hausgerätesteuerung 62.

Das lokale Netzwerk 60 in Gebäude 30 kann bspw. ein drahtloses und/oder ein verkabeltes LAN (Local Area Network) sein. Die Reichweite des lokalen Netzwerks 60 ist in der Regel durch das Gebäude 30 begrenzt. Das lokale Netzwerk 60 kann bspw. als IP-Netzwerk realisiert sein.

Das Gebäude 30 bzw. der sich im Gebäude befindliche Teil der Gebäudeautomatisierungsstruktur, die nomadische Appliance 10, die entfernte Appliance 11 oder der Zentrale Dienst 80 müssen mit einer jeweiligen globalen Adresse aus dem Internet heraus adressierbar sein. Gemäß dem Stand der Technik handelt es sich dabei in der Regel um eine jeweilige IP-Adresse.

Innerhalb des Gebäudes 30 kann sich bspw. ein weiteres Gerät, nämlich das IAD (Integrated Access Device) befinden. Das IAD bildet den Netzabschluss eines Fernmeldenetzes zum Teilnehmer. Es bildet also die Verbindung zwischen dem Fernbereichsnetz eines Telekommunikationsanbieters und dem Kundennetzwerk. Hinter dem IAD ist ein Modem und kann ein Router des Kunden vorgesehen sein. Somit kann eine Kommunikation zwischen dem lokalen Netzwerk 60 und dem Internet 70 ermöglicht werden. Das IAD ist in Figur 1 jedoch nicht dargestellt. Der Router besitzt mit seiner Adresse insbesondere die globale Adresse, in der Regel die IP-Adresse des Gebäudes 30. Der Router ist über Modem und IAD und somit das Gebäude 30 aus dem Internet heraus adressierbar. In der Regel wird dem Router des Kunden von dem Telekommunikationsanbieter zeitlich begrenzt eine IPv4-Adresse zugewiesen.

Der Proxy-Server oder kurz Proxy 40 unterstützt eine Integration von nomadischen Appliances 10 oder entfernten Appliances 11 in die Gebäudeautomatisierungsstruktur. Der Proxy verwaltet Objekte der Gebäudeautomatisierungsstruktur zur Integration von nomadischen Appliances 10 und entfernten Appliances 11 in die lokale Gebäudeautomatisierung und organisiert Aktivitäten des Verfahrens zur Integration von nomadischen Appliances 10 und entfernten Appliances 11 in die lokale Gebäudeautomatisierung im Gebäude 30.

Figur 2 zeigt die innere Struktur eines erfindungsgemäß vorzusehenden Proxys 40.

Der Proxy 40 umfasst als Sub-System eine Logik 41 und ein Repository 42. Das Sub-System Logik 41 steuert den Ablauf aller internen Prozesse des Proxys 40. Sie beinhaltet die entsprechende Programmlogik.

Das Sub-System Repository 42 erlaubt ein Persistieren von Informationen, wie bspw. von Verbindungsdaten hin zum Home-Gateway 50, der eigenen Proxy-ID, der Adresse des Zentralen Dienstes 80 sowie Kontextdaten für jede nomadische Appliance 10 oder entfernte Appliance 11, d. h. jeweils deren ID, globale Adresse, und Credential.

Der Zentrale Dienst 80 kann bspw. von einem Anbieter der jeweiligen Gebäudeautomatisierungsstruktur betrieben und dessen Kunden zur Verfügung gestellt werden. Er kann als ein Cloud-Service realisiert sein. Verfahrensschritte, die der Zentrale Dienst im Rahmen einer Integration von zumindest zeitweise von einem jeweiligen Gebäude entfernten Geräten in die jeweils lokale Gebäudeautomatisierung durchführt, stellt der Zentrale Dienst 80 bspw. über das Internet bereit. Der Zentrale Dienst 80 besteht aus denselben Sub-Komponenten bzw. Sub-Systemen wie der voranstehend beschriebene Proxy 40.

Allerdings unterscheiden sich die jeweiligen Funktionsumfänge voneinander.

Der Zentrale Dienst 80 unterstützt ebenfalls die Integration von nomadischen Appliances 10 oder entfernten Appliances 11 in die Gebäudeautomatisierungsstruktur. Der Zentrale Dienst verwaltet und organisiert Objekte der Struktur und Aktivitäten des Verfahrens außerhalb des Gebäudes 30.

Der Zentrale Dienst 80 existiert in der Regel nur einmal, während es viele Home-Gateways 50 und viele Proxys 40, jeweils ein Paar in jeder Räumlichkeit, gibt. Dies impliziert, dass der Zentrale Dienst 80 anderen funktionalen Anforderungen, wie bspw. Verfügbarkeit oder Skalierbarkeit genügen muss, als insbesondere ein Proxy 40. Entsprechend ist der Zentrale Dienst 80 anders zu bauen als ein Proxy 40. Allerdings sind diese baulichen Unterschiede im Rahmen der vorliegenden Beschreibung nicht von Bedeutung.

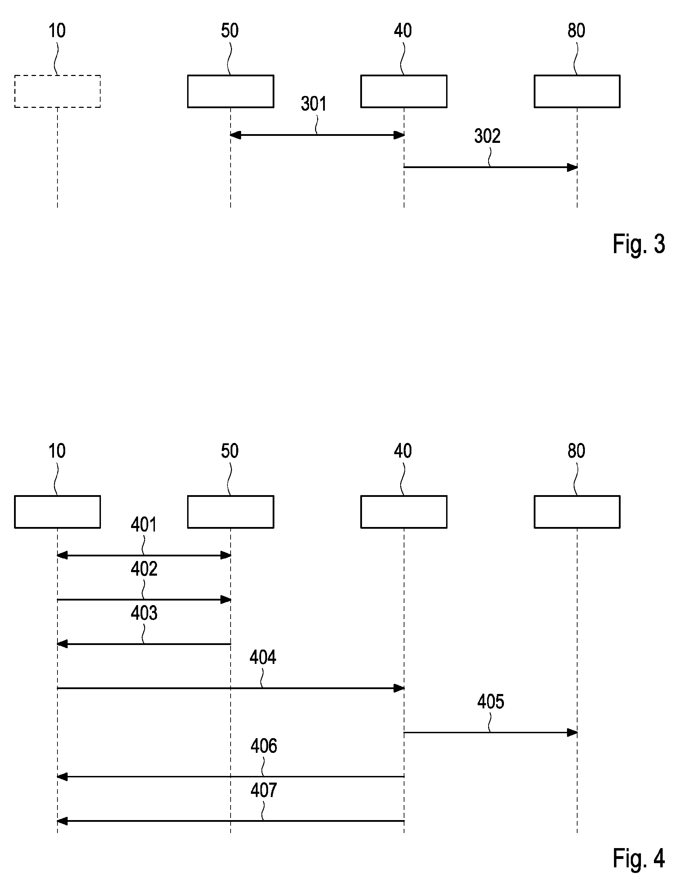

Die folgenden Abbildungen 3 bis 12 lehnen sich an sogenannte UML-Sequenzdiagramme an.

Ein gestrichelt dargestelltes Rechteck bezeichnet ein Objekt, das allerdings in dem jeweiligen Verfahrensschritt nicht eingebunden ist. Es ist nur der Vollständigkeit halber dargestellt.

Figur 3 zeigt nun einen ersten Verfahrensschritt gemäß einer Ausführungsform des erfindungsgemäßen Verfahrens, nämlich die Anmeldung des Proxys 40.

In Figur 3 ist demnach eine nomadische Appliance 10, das Home-Gateway 50, der Proxy 40 sowie der Zentrale Dienst 80 jeweilig als Rechteck schematisch dargestellt. Das Home-Gateway 50 und der Proxy 40 etablieren, wie durch Pfeil 301 dargestellt, miteinander eine vertrauenswürdige Verbindung, ein sogenanntes Pairing. Der Aufbau einer solchen Verbindung ist aus dem Stand der Technik bekannt.

Der Proxy 40 hinterlegt seine Proxy-ID beim Zentralen Dienst 80, wie durch Pfeil 302 angedeutet. Die Proxy-ID kann bspw. eine eindeutige MAC-Adresse sein. Die konkrete Ausprägung der Adresse ist im Rahmen der vorliegenden Beschreibung ohne Relevanz, und es kann jede geeignete Ausprägung der Adresse gewählt werden. Ferner hinterlegt der Proxy 40 die globale Adresse des Gebäudes beim Zentralen Dienst 80. Die globale Adresse wurde bspw. dem voranstehend genannten Router von einem Internet-Provider, bspw. über DHCP, zugewiesen. Der Zentrale Dienst 80 hinterlegt sodann eine Zuordnung von Proxy-ID und der globalen Adresse, bspw. in einer Tabelle.

Figur 4 zeigt einen zweiten Verfahrensschritt einer Ausführungsform des erfindungsgemäßen Verfahrens, nämlich ein lokales Registrieren einer nomadischen oder entfernten Appliance 10 bzw. 11. Auch hier ist die nomadische Appliance 10 stellvertretend für eine nomadische Appliance oder entfernte Appliance dargestellt. Ferner ist das Home-Gateway 50, der Proxy 40 und der Zentrale Dienst 80 dargestellt. In einem ersten Schritt 401 wird die nomadische Appliance 10 mit dem Home-Gateway 50 gepaired. Der Vorgang des Pairings entspricht dabei dem Stand der Technik. Die nomadische Appliance 10 ist nun in die Gebäudeautomatisierungsstruktur eingebunden.

Die nomadische Appliance 10 meldet sich in Schritt 402 als "nomadisch" beim Home-Gateway 50 an. Dabei übermittelt sie gleichzeitig ihre Appliance-ID. Die Übermittlung der Appliance-ID ist an dieser Stelle optional. Das Home-Gateway 50 persistiert die Appliance-ID mit dem vorausgegangenen Paring-Kontext bspw. in einer Tabelle.

In Schritt 403 übermittelt das Home-Gateway 50 die lokale Adresse des Proxy 40 an die Appliance 10.

Die nomadische Appliance 10 registriert sich in Schritt 404 beim Proxy 40. Sie übermittelt dabei gleichzeitig ihre Appliance-ID. Der Proxy 40 hinterlegt ein vorab generiertes Credential, seine eigene Proxy-ID sowie die Appliance-ID in einem Schritt 405 beim Zentralen Dienst 80. Der Zentrale Dienst 80 hinterlegt eine Zuordnung von Proxy-ID, Appliance-ID und Credential bspw. in einer Tabelle.

In der Regel ist das Credential eine sehr lange Zahl, die de facto nicht zu erraten ist.

Der Zentrale Dienst hinterlegt in einem Schritt 406 bei der nomadischen Appliance 10 die Adresse des Zentralen Dienstes. Ferner hinterlegt der Zentrale Dienst in Schritt 407 bei der nomadischen Appliance 10 die Proxy-ID und das Credential.

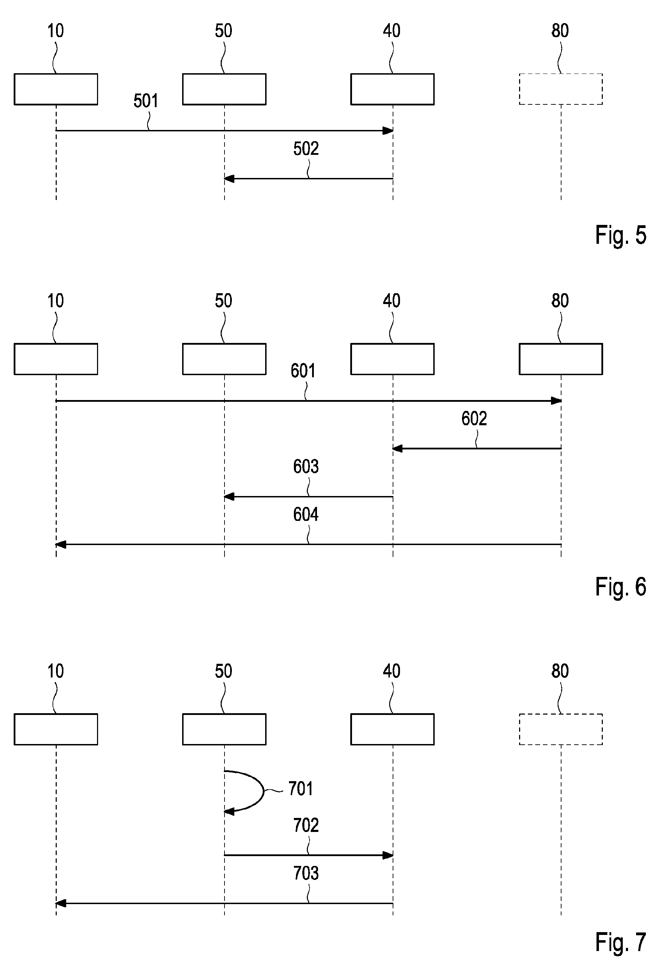

Figur 5 zeigt einen dritten Verfahrensschritt einer Ausführungsform des erfindungsgemäßen Verfahrens. Dabei handelt es sich um ein wiederkehrendes lokales Abmelden einer nomadischen Appliance 10. Die nomadische Appliance 10 verlässt zum Beispiel gemeinsam mit einem Benutzer das Gebäude 30. In diesem Verfahren wird beschrieben, wie sich die Appliance 10 beim Proxy 40 abmeldet. Sie wird von nun an nicht mehr über die Kommunikationswege 1a bis 1c, wie in Figur 1 gezeigt, erreichbar sein. "Wiederkehrend" bedeutet, dass dieser Verfahrensschritt wiederkehrend, zum Beispiel jedes Mal, wenn die Appliance 10 das Gebäude 30 verlässt, durchgeführt wird. Es kann nicht immer gewährleistet werden, dass die Appliance 10 sich noch rechtzeitig vor dem Verlassen des Gebäudes 30 abmelden kann. Daher ist dieser Verfahrensschritt optional. Alternativ erkennt das Home-Gateway 50, dass die Appliance 10 nicht mehr verfügbar ist und meldet sie beim Proxy 40 ab.

Dargestellt sind wiederum die nomadische Appliance 10, das Home-Gateway 50, der Proxy 40 sowie der Zentrale Dienst 80. Die nomadische Appliance 10 meldet sich in Schritt 501 beim Proxy 40 ab. Sie übermittelt dabei ihre Appliance-ID. Der Proxy 40 meldet in Schritt 502 die Appliance 10 beim Home-Gateway 50 als nicht mehr erreichbar ab. Der Proxy 40 übermittelt dabei die Appliance ID der abzumeldenden Appliance 10.

Figur 6 zeigt einen vierten Verfahrensschritt einer Ausführungsform des erfindungsgemäßen Verfahrens. Die nomadische Appliance 10 befindet sich nun in einem Bereich, in dem sie über das Internet kommunizieren kann. In diesem Verfahrensschritt wird beschrieben, wie sich die nomadische Appliance 10 beim Dienst 80 anmeldet. "Wiederkehrend" bedeute, dass dieser Verfahrensschritt wiederkehrend, bspw. jedes Mal, wenn die Appliance 10 in einen Bereich eintritt, in dem sie über das Internet kommunizieren kann, durchgeführt wird.

Dargestellt sind wiederum die nomadische Appliance 10, das Home-Gateway 50, der Proxy 40 sowie der Zentrale Dienst 80.

In einem Schritt 601 meldet sich die nomadische Appliance 10 beim Zentralen Dienst 80 als wieder erreichbar an. Dabei übermittelt sie die Proxy-ID, ihre eigene Appliance-ID, das Credential sowie ihre aktuelle globale Adresse. Das Credential wird in einem hier nicht dargestellten Schritt authentifiziert, gefolgt von einer Autorisierung der Appliance. Der Zentrale Dienst 80 meldet in Schritt 602 die nomadische Appliance 10 beim Proxy 40 an. Der Zentrale Dienst 80 übermittelt dazu die Appliance-ID.

Der Proxy 40 meldet in Schritt 603 die nomadische Appliance 10 beim Home-Gateway 50 an. Der Proxy 40 hinterlegt dabei die Appliance-ID und die globale Adresse der nomadischen Appliance 10.

Der Zentrale Dienst 80 hinterlegt in Schritt 604 die globale Adresse des Gebäudes 30 bei der nomadischen Appliance 10.

Figur 7 zeigt einen fünften Verfahrensschritt einer Ausführungsform des erfindungsgemäßen Verfahrens. In diesem Verfahrensschritt wird beschrieben, wie das Home-Gateway 50 eine Nachricht an eine nicht lokal verfügbare nomadische Appliance 10 sendet.

Wieder dargestellt sind die nomadische Appliance 10, das Home-Gateway 50, der Proxy 40 sowie der Zentrale Dienst 80. Das Home-Gateway 50 überprüft, wie durch gebogenen Pfeil 701 angedeutet, ob insbesondere eine nomadische Appliance 10 über ein lokales Netz zur Hausgerätesteuerung 62 erreichbar ist. In diesem vorliegenden Szenario sei dies nicht der Fall. Sodann sendet das Home-Gateway 50 in Schritt 702 die Nachricht, gemeinsam mit der Appliance-ID der nomadischen Appliance 10 an den Proxy 40. Der Proxy 40 sendet die Nachricht in Schritt 703 über den in Figur 1 gezeigten Weg 2c, 2d, 3c, 3d an die nomadische Appliance 10. Der Proxy 40 benutzt dazu die globale Adresse der nomadischen Appliance 10, die ihm in einem vorangegangenen Verfahrensschritt mitgeteilt wurde.

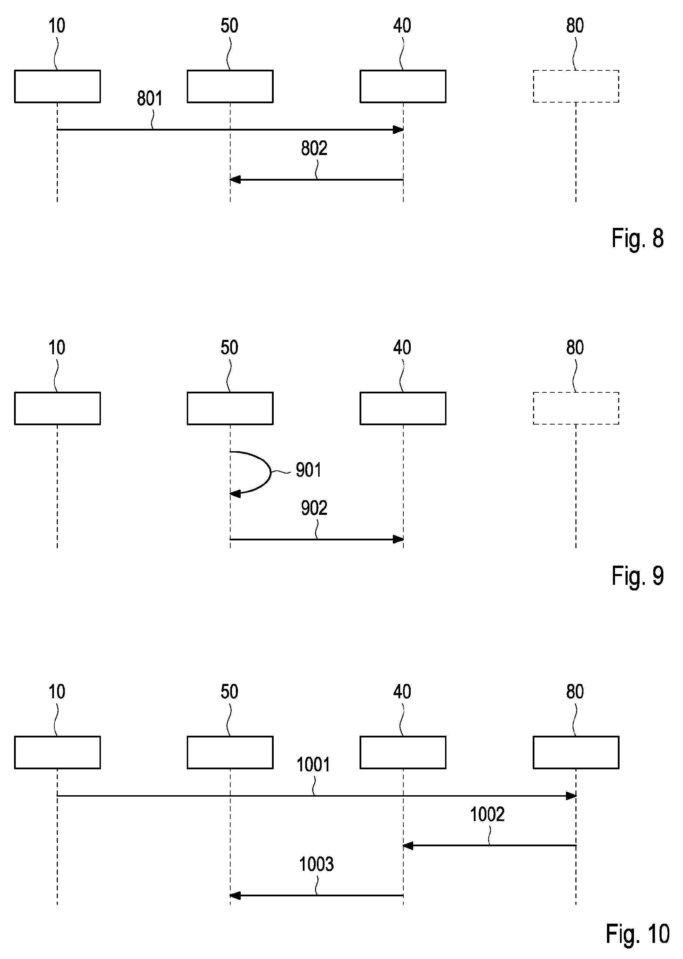

Figur 8 zeigt einen sechsten Verfahrensschritt einer Ausführungsform des erfindungsgemäßen Verfahrens, nämlich eine Kommunikation der nomadischen Appliance 10 hin zu dem Home-Gateway 50.

In diesem Verfahrensschritt wird beschrieben, wie die nicht lokal verfügbare nomadische Appliance 10 eine Nachricht an das Home-Gateway 50 sendet. Dargestellt sind wiederum die nomadische Appliance 10, das Home-Gateway 50, der Proxy 40 sowie der Zentrale Dienst 80. Die lokal nicht verfügbare nomadische Appliance 10 sendet in einem Schritt 801 die Nachricht gemeinsam mit der Proxy-ID, ihrer Appliance-ID und dem Credential an den Proxy 40. Das Credential wird in einem hier nicht dargestellten Schritt authentifiziert, gefolgt von einer Autorisierung der Appliance. Zur Adressierung nutzt sie die globale Adresse des Gebäudes 30, die ihr in einem vorausgegangenen Verfahrensschritt mitgeteilt wurde. Der Proxy 40 schickt in Schritt 802 die Nachricht gemeinsam mit der Appliance-ID an das Home-Gateway 50.

Figur 9 zeigt einen siebten Verfahrensschritt einer Ausführungsform des erfindungsgemäßen Verfahrens. In diesem Verfahrensschritt wird beschrieben, wie das Home-Gateway 50 eine Nachricht an die weder global noch lokal verfügbare nomadische Appliance 10 sendet. Dargestellt sind wiederum die nomadische Appliance 10, das Home-Gateway 50, der Proxy 40 sowie der Zentrale Dienst 80. Das Home-Gateway 50 überprüft, wie durch gebogenen Pfeil 901 dargestellt, ob die nomadische Appliance 10 über ein lokales Netzwerk zur Hausgerätesteuerung 62 erreichbar ist. In diesem Szenario sei dies nicht der Fall. Das Home-Gateway 50 sendet dann in einem Schritt 902 die Nachricht gemeinsam mit der Appliance-ID der nomadischen Appliance 10 an den Proxy 40. Der Proxy 40 erkennt nunmehr, dass die nomadische Appliance 10 global nicht verfügbar ist. Der Proxy 40 verwirft die Nachricht. Alternativ könnte der Proxy auch die Nachricht zwischenspeichern und später bei festgestellter Verfügbarkeit der Appliance 10 diese an die Appliance 10 weiterleiten. Auch das Home-Gateway 50 könnte die Nachricht zwischenspeichern und bei festgestellter Erreichbarkeit der nomadischen Appliance 10 die Nachricht nochmals versenden.

Figur 10 zeigt einen achten Verfahrensschritt einer Ausführungsform des erfindungsgemäßen Verfahrens, nämlich ein wiederkehrendes zentrales Abmelden einer nomadischen Appliance 10. In diesem Verfahrensschritt wird beschrieben, wie sich eine nicht global verfügbare nomadische Appliance 10 abmeldet. Sie wird von nun an nicht mehr über die Kommunikationswege 3d und 3c erreichbar sein. "Wiederkehrend" bedeutet, dass dieser Verfahrensschritt wiederkehrend, bspw. jedes Mal, wenn die Appliance 10 sich in einem Bereich ohne Konnektivität begibt, durchgeführt wird. Allerdings kann nicht immer gewährleistet werden, dass sich die Appliance 10 noch rechtzeitig vor dem Verlassen eines Bereichs mit Konnektivität abmelden kann. Daher ist dieser Verfahrensschritt optional.

In einer alternativen Ausführungsform erkennt der Zentrale Dienst 80, dass die Appliance 10 nicht mehr verfügbar ist und meldet sie dann vom Proxy 40 ab. Dargestellt sind wiederum die nomadische Appliance 10, das Home-Gateway 50, der Proxy 40 sowie der Zentrale Dienst 80. Die nomadische Appliance 10 meldet sich in Schritt 1001 beim Zentralen Dienst 80 ab. Sie übermittelt die Proxy-ID, ihre Appliance-ID sowie das Credential. Das Credential wird in einem hier nicht dargestellten Schritt authentifiziert, gefolgt von einer Autorisierung der Appliance. Der Zentrale Dienst 80 meldet in Schritt 1002 die nomadische Appliance 10 beim Proxy 40 ab. Er übermittelt dabei die Appliance-ID. Der Proxy 40 meldet in Schritt 1003 die nomadische Appliance 10 beim Home-Gateway 50 ab. Er übermittelt dabei die Appliance-ID.

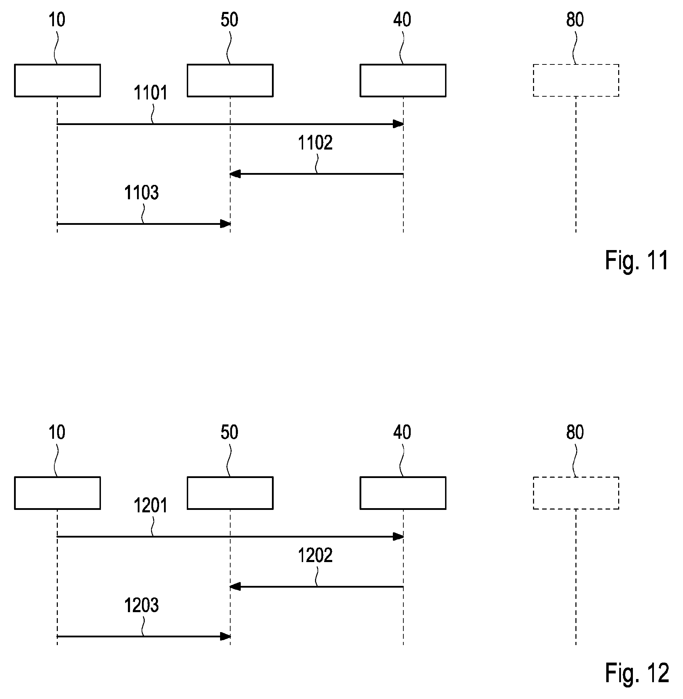

Figur 11 zeigt einen neunten Verfahrensschritt einer Ausführungsform des erfindungsgemäßen Verfahrens, nämlich ein wiederkehrendes lokales Anmelden einer entfernten oder nomadischen Appliance. Die nomadische Appliance 10 betritt bspw. gemeinsam mit einem Benutzer das Gebäude 30. In diesem Verfahrensschritt wird beschrieben, wie sich in diesem Fall die nomadische Appliance 10 bei der Gebäudeautomatisierungsstruktur anmeldet. Sie wird von nun an über die Kommunikationswege 1a bis 1c erreichbar sein. "Wiederkehrend" bedeutet, dass dieser Verfahrensschritt wiederkehrend, bspw. wenn die nomadische Appliance 10 das Gebäude betritt, durchgeführt wird.

Dargestellt sind wiederum die nomadische Appliance 10, das Home-Gateway 50, der Proxy 40 sowie der Zentrale Dienst 80. In Schritt 1102 meldet sich die nomadische Appliance 10 beim Proxy 40 an. Sie übermittelt dabei ihre Appliance-ID. In Schritt 1102 meldet der Proxy 40 die nomadische Appliance 10 beim Home-Gateway 50 an. Er übermittelt dabei die Appliance-ID der nomadischen Appliance 10. In Schritt 1103 wird die nomadische Appliance 10 ggf. mit dem Home-Gateway 50 gepaired. Die Appliance 10 ist nun in die Gebäudeautomatisierungsstruktur lokal eingebunden. Das Pairing sollte ohne Interaktion mit dem Nutzer ermöglicht werden.

Figur 12 beschreibt einen zehnten Verfahrensschritt einer Ausführungsform des erfindungsgemäßen Verfahrens, nämlich eine De-Registrierung einer entfernten oder nomadischen Appliance. Eine nomadische Appliance 10 de-registriert sich bei der Gebäudeautomatisierungsstruktur, bei der sie noch registriert ist. Die nomadische Appliance 10 wird in der Gebäudeautomatisierungsstruktur nicht mehr bekannt sein.

Dargestellt sind wiederum die nomadische Appliance 10, das Home-Gateway 50, der Proxy 40 sowie der Zentrale Dienst 80. In Schritt 1201 de-registriert sich die nomadische Appliance 10 beim Proxy 40. Dabei übermittelt sie ihre Appliance-ID. Der Proxy 40 de-registriert die nomadische Appliance 10 in Schritt 1202 beim Home-Gateway 50. Er übermittelt dazu ihre Appliance-ID. In Schritt 1203 findet zwischen dem Home-Gateway 50 und der nomadischen Appliance 10 ein Un-Pairing statt. Die Appliance 10 ist nun in der Gebäudeautomatisierungsstruktur nicht mehr bekannt. Der Vorgang des Un-Pairings entspricht dabei vollständig dem Stand der Technik. Das Un-Pairing wird über das lokale Netz 60 durchgeführt.

## Patentansprüche

1. Verfahren zur Integration mindestens eines zumindest zeitweise von einer Räumlichkeit entfernten Geräts (10) in eine lokale Räumlichkeitsautomatisierungsstruktur, bei dem ein Proxy-Server (40) vorgesehen wird und das mindestens eine zumindest zeitweise von der Räumlichkeit entfernte Gerät (10) bei dem Proxy-Server (40) registriert wird, wodurch das mindestens eine zumindest zeitweise von der Räumlichkeit entfernte Gerät (10) und ein in der Räumlichkeitsautomatisierungsstruktur angeordnetes Home-Gateway (50) über den Proxy (40) gegenseitig Nachrichten übermitteln können, bei dem sich der Proxy-Server (40) über eine erste Pairing-Verbindung zu dem von der Automatisierungsstruktur ansprechbaren Home-Gateway (50) und durch Hinterlegen einer Proxy-ID und einer Proxy-spezifischen IP-Adresse bei einem Zentralen Dienst (80) registriert, und das mindestens eine zumindest zeitweise von der Räumlichkeit entfernte Gerät (10) bei temporärer Anwesenheit in der Räumlichkeit über eine zweite Pairing-Verbindung zu dem Home-Gateway (50) in der Automatisierungsstruktur registriert wird, wobei das Home-Gateway (50) eine lokale Proxy-spezifische Adresse an das mindestens eine zumindest zeitweise von der Räumlichkeit entfernte Gerät (10) übermittelt, das dann bei dem Proxy-Server (40) registriert wird, der eine Appliance-ID zusammen mit der Proxy-ID bei dem Zentralen Dienst (80) hinterlegt und der Zentrale Dienst (80) in Reaktion darauf bei dem mindestens einen zumindest zeitweise von der Räumlichkeit entfernten Gerät (10) eine Adresse des Zentralen Dienstes (80) sowie die Proxy-ID hinterlegt, worüber das mindestens eine zumindest zeitweise von der Räumlichkeit entfernte Gerät (10) bei Eintritt in einen Bereich, in dem es über das Internet (70) kommunizieren kann, sich beim Zentralen Dienst (80) anmeldet, der dann das Gerät (10) beim Proxy (40) und der Proxy (40) das Gerät (10) beim Home-Gateway (50) anmeldet.

2. Verfahren nach Anspruch 1, bei dem sich das mindestens eine zumindest zeitweise von der Räumlichkeit entfernte Gerät (10) bei Verlassen der Räumlichkeit mittelbar über den Proxy (40) und mit Übermittlung der Appliance-ID beim Home-Gateway (50) abmeldet.

3. Verfahren nach einem der voranstehenden Ansprüche, bei dem sich das mindestens eine zumindest zeitweise von der Räumlichkeit entfernte Gerät (10) bei Eintritt in die Räumlichkeit mit Übermittlung der Appliance-ID beim Proxy (40) und der Proxy (40) das Gerät (10) beim Home-Gateway (50) anmeldet.

4. Verfahren nach einem der voranstehenden Ansprüche, bei dem sich das mindestens eine zumindest zeitweise von der Räumlichkeit entfernte Gerät (10) bei wiederkehrendem Eintritt in einen Bereich, in dem es über das Internet (70) kommunizieren kann, mit Übermittlung der Proxy-ID, der Appliance-ID sowie einer aktuellen, globalen Adresse des mindestens einen zumindest zeitweise von der Räumlichkeit entfernten Geräts (10) bei dem Zentralen Dienst (80) und der Zentrale Dienst (80) das Gerät (10) mit Übermittlung der Appliance-ID beim Proxy (40) und der Proxy (40) das Gerät (10) mit Übermittlung der Appliance-ID beim Home-Gateway (50) anmeldet.

5. Verfahren nach einem der voranstehenden Ansprüche, bei dem zur Übermittlung einer Nachricht von dem Home-Gateway (50) zu dem mindestens einen zumindest zeitweise von der Räumlichkeit entfernten Gerät (10) von dem Home-Gateway (50) dessen Erreichbarkeit über ein lokales Netz (60) der Räumlichkeit geprüft und bei Nichterreichbarkeit des Geräts (10) über das lokale Netz (60) der Räumlichkeit die Nachricht zusammen mit der Appliance-ID an den Proxy (40) gesendet wird, der die Nachricht an das mindestens eine zumindest zeitweise von der Räumlichkeit entfernte Gerät (10) weiterleitet.

6. Verfahren nach einem der voranstehenden Ansprüche, bei dem sich das Gerät (10) bei Verlassen eines Bereichs, in dem es über das Internet (70) kommunizieren kann, beim Zentralen Dienst (80) mit Übermittlung der Proxy-ID und der Appliance-ID abmeldet und der Zentrale Dienst (80) das Gerät (10) mit Übermittlung der Appliance-ID beim Proxy (40) und der Proxy (40) das Gerät (10) mit Übermittlung der Appliance-ID beim Home-Gateway (50) abmeldet.

7. Verfahren nach einem der voranstehenden Ansprüche, bei dem zum De-Registrieren des mindestens einen zumindest zeitweise von der Räumlichkeit entfernten Geräts (10) von der Automatisierungsstruktur sich das Gerät (10) mit Übermittlung der Appliance-ID bei dem Proxy (40) und der Proxy (40) das Gerät (10) bei dem Home-Gateway (50) de-registriert und zwischen dem Home-Gateway (50) und dem Gerät (10) ein Un-Pairing durchgeführt wird.

8. Verfahren nach einem der voranstehenden Ansprüche, bei dem die gegenseitige Nachrichtenübermittlung zwischen dem Home-Gateway (50) und dem Gerät (10) kabellos, auf einer Funktechnologie basierend oder kabelbasiert realisiert wird.

9. Verfahren nach einem der voranstehenden Ansprüche, bei dem der Zentrale Dienst (80) als Cloud-Service außerhalb der Räumlichkeit realisiert wird und von ihm bereitzustellende Verfahrensschritte eines Verfahrens gemäß einem der voranstehenden Ansprüche über das Internet (70) bereitgestellt werden.

10. Verfahren nach einem der voranstehenden Ansprüche, bei dem eine Verbindung zwischen Home-Gateway (50) und dem mindestens einen zumindest zeitweise von der Räumlichkeit entfernten Gerät (10) auf IP-Technologie und IP Adressen oder auf einem anderen geeigneten Kommunikationsformat und einem dazugehörigen Adressierungsformat basiert.

11. System zur Integration mindestens eines zumindest zeitweise von einer Räumlichkeit entfernten Geräts (10) in eine lokale Räumlichkeitsautomatisierungsstruktur, wobei das System mindestens einen Proxy-Server (40) mit einer Proxy-ID, der dazu ausgelegt ist, mit einem von der Räumlichkeitsautomatisierungsstruktur umfassten Home-Gateway (50) zu kommunizieren und darüber eine Kommunikation zwischen Home-Gateway (50) und dem zumindest zeitweise von der Räumlichkeit entfernten Gerät (10) zu verwalten, und einen Zentralen Dienst (80), der dazu ausgelegt ist, zur Integration des Geräts (10) in die lokale Räumlichkeitsautomatisierungsstruktur außerhalb der Räumlichkeit notwendige Schritte umzusetzen, umfasst.

12. System nach Anspruch 11, bei dem sowohl der Proxy (40) als auch das Home-Gateway (50) als Zusatzmodul auf einem in der Automatisierungsstruktur bereits vorhandenen Gerät betrieben wird.

13. System nach Anspruch 11, bei dem sowohl der Proxy (40) als auch das Home-Gateway (50) als ein separates Gerät in der Automatisierungsstruktur realisiert ist.

14. System nach Anspruch 11, bei dem sich das Home-Gateway (50) außerhalb der Räumlichkeit befindet und über das Internet (70), insbesondere mittels einer in der Räumlichkeit angeordneten Home Automation Bridge anzusprechen ist.

15. System nach einem der Ansprüche 11 bis 14, bei dem die Räumlichkeit eine immobile oder eine mobile Räumlichkeit ist.

16. Home-Gateway, das einem System nach einem der Ansprüche 11 bis 15 zugeordnet ist.

17. Automatisierungsstruktur für eine Räumlichkeit, bei der ein Proxy-Server (40) anzuordnen ist und die dazu ausgelegt ist, ein Verfahren nach einem der Ansprüche 1 bis 10 umzusetzen.
